# NEW EUROPEAN PATENT SPECIFICATION

(11) **EP 2 130 799 B2**
(45) Date of publication and mention of the opposition decision: **19.10.2016**
(45) Mention of the grant of the patent: 23.01.2013
(21) Application number: 09158315.3
(22) Date of filing: 21.04.2009
(51) Int. Cl.: C02F 1/00

(54) **A replaceable cartridge type filter for filtering systems and a filtering system incorporating the filter.**
Austauschbarer kartuschenähnlicher Filter für Filtersysteme und ein Filtersystem mit dem Filter
Filtre de type cartouche remplaçable pour filtrer les systèmes et système de filtrage incorporant le filtre

(30) Priority: 27.05.2008 IT PD20080152
(43) Date of publication of application: 09.12.2009
(73) Proprietor: Laica S.p.A., 36020 Barbarano Vicentino (VI) (IT)
(72) Inventor: Moretto, Maurizio, 36100, Vicenza (IT)
(74) Representative: Cantaluppi, Stefano

(56) References cited:
- EP-A1- 1 354 857
- WO-A-97/41066
- WO-A1-03/011766
- WO-A2-97/41066
- DE-A1- 19 842 868
- DE-A1- 19 915 829
- DE-U1- 29 922 991
- GB-A- 2 379 439
- US-A- 3 670 915
- US-A- 5 252 206
- US-B1- 6 238 552
- US-B1- 6 524 477
- VIEW OF A BRITA ELEMARIS XL JUG AND PACKAGING FROM 2005 XP003035385
- USER MANUAL AND WARRANTY CARD FROM THE BOX OF BRITA ELEMARIS XL JUG XP003035386
- INVOICE CONCERNING THE SALE OF ELMARIS XL JUGS TO TESCO IN JULY 2005 XP003035387

## Description

The present invention relates to a replaceable cartridge type filter for filtering systems, particularly for processing drinking water, and a filtering system including the cartridge type filter.

In the relevant prior art, it is known to use filtering systems for processing water for domestic use, in which a replaceable cartridge type filter is introduced in a sealing manner into a pipe of the filtering system in such a manner that the water passing through the pipe is forced to travel through the filter and the bed of filtering material contained therein. The filter is normally fitted in a seat by means of an external annular edge thereof which defines a sealing surface which is in turn received with hydraulic sealing and maintained in the above-mentioned seat. Examples of these cartridge type filters are disclosed in WO 97/41066 or DE 199 15 829.

With this system for producing jugs and kettles which are provided for processing involving filtering and purifying water for domestic use.

No matter how precisely both the edge of the casing and the relevant fitting seat are processed, it is possible, if not actually commonplace, for the efficacy of the sealing between the seat and the edge of the filter to be potentially unstable. This is both because replacement filters from a specific manufacturer are often fitted in filtering systems from other manufacturers, with resultant geometric inaccuracy in the connection zones between the filter and seat, and because the filters and the jugs are generally produced by moulding from plastics material, with the result that it is probable that, following deformations, contractions, etc., the sealing surfaces do not completely engage with each other.

In seeking to adapt the filter to jugs of different types, it is evident that the geometry of the annular edge and the relevant sealing surface would have to be configured so as to be able to adapt to smaller seats among the various filtering systems for which the filter is intended.

A main object of the invention is to provide a replaceable cartridge type filter which is particularly intended for the uses set out above and which is functionally and structurally configured so as to overcome all the disadvantages set out with reference to the prior art cited. Within the context of the main object, another object of the invention is to provide a cartridge type filter which is universally adaptable to jugs which are of a similar type but from different manufacturers.

Another object of the invention is to provide a filtering system and relevant filter which are highly adaptable with respect to each other.

These objects and other objects which will be set out more clearly below are achieved by a cartridge type filter and a filtering system which are constructed in accordance with the appended claims.

The features and advantages of the invention will be better understood from the following detailed description of some preferred, non-exclusive embodiments which are illustrated purely by way of non-limiting example with reference to the appended drawings, in which:
- Figure 1 is a side view of a filtering system comprising a cartridge type filter according to the present invention;
- Figure 2 is a cross-section of a component of the filter of Figure 1;
- Figures 3a-e are cross-sections of construction variants of the detail indicated III in Figure 2;
- Figure 4 is a cross-section of a construction variant of the filter of Figure 1;
- Figure 5 is a cross-section of the detail indicated V in Figure 4.

In the Figures, a replaceable cartridge type filter which is constructed in accordance with the present invention is generally designated 1. A filtering system is generally designated 2 and is embodied by a jug for purifying water for domestic use, but could also comprise a kettle, a tisane-maker, a machine for preparing coffee or other beverages, and the like. The filter 1 is provided so as to be fitted in a pipe 3 which connects an upper vessel 4 to a lower vessel 5 of the jug so that all the water which, owing to gravity, is caused to pass from the upper vessel to the lower vessel is obliged to travel through the filter 1.

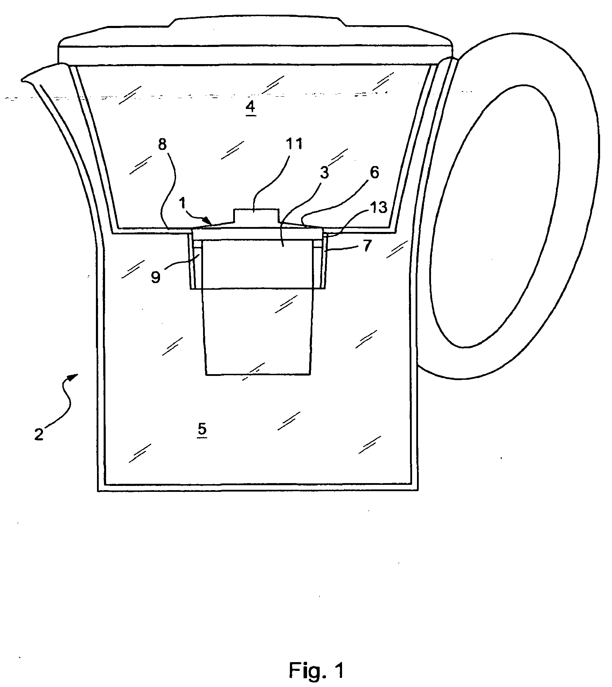

In order to fit the filter 1, there is formed in the pipe 3 a seat 6 having a side wall 7 and a shoulder 8 which extend axially and radially relative to the pipe, respectively. The side wall 7 may have, in a provided configuration thereof (Figure 1), a plurality of axially extending rib structures 9.

The filter 1 comprises a casing 11, which contains a filtering bed, for example, a mixture of active carbon and ion exchange resin, whose composition is selected in accordance with the type of filtration desired.

The casing 11 comprises a bowl 11a and a lid 11b which are both provided with holes for the passage of the water to be filtered.

At the junction zone between the lid and the bowl, there is formed an external annular edge 13 which is received in the seat 6 when the filter 1 is fitted in the pipe 3 in order to hold the filter in a sealing manner in the pipe so that the pipe portions upstream and downstream of the cartridge communicate with each other only by way of the cartridge, respectively.

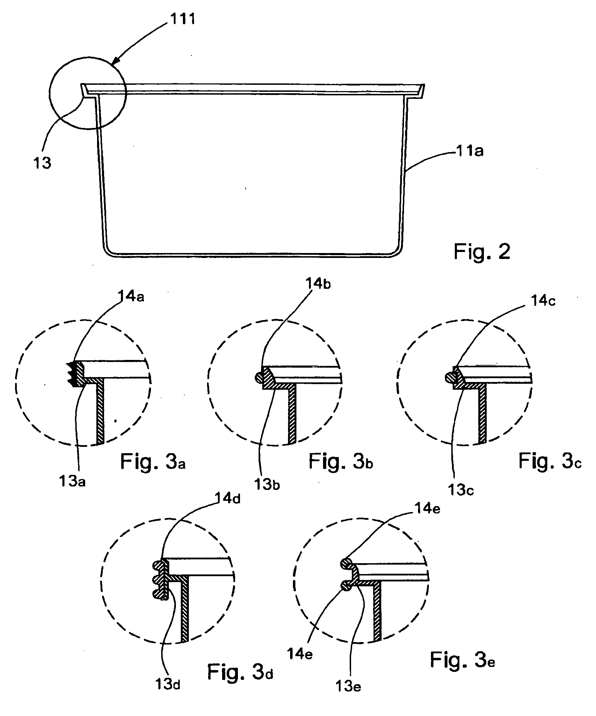

The Figures 3a to 3e illustrate five examples of different geometries for that edge, wherein the edge is indicated by the reference numeral 13, with the addition of a variable index from a to e. In all cases, the edge 13a-e is constructed on the bowl 11a and is provided with a deformable seal 14a-e, whose deformability under load is substantially greater than the deformability of the edge under an equal load. Typically, the edge 13a-e is constructed from a plastics material such as polypropylene. The corresponding seal 14a-e can instead be constructed from natural or synthetic rubber.

In all cases, the seal is jointly produced by co-moulding so as to fix it closely to the edge 13.

In Figure 3a, the edge 13a has a sealing surface which is substantially planar and the seal 14a is of the type having multiple lips.

In Figure 3b, the seal 14b has a planar face at the connection side with respect to the sealing surface and has a rounded cross-section at the opposite side.

In Figure 3c, the edge 13c has a sealing surface which has an annular recess, in which there is partially received the seal 14c which further has a rounded profile which is similar to the one in the preceding example.

In Figure 3d, the edge 13d has a planar sealing surface which has a wide and shallow groove, in which there is partially received the seal 14d having multiple lips with a rounded profile.

In Figure 3e, the edge 13e has a planar sealing surface which has a wide and shallow groove, similarly to the preceding case, but with the difference therefrom that two seals 14e are applied, again in this case by means of joint injection-moulding (co-moulding), to the tops separated by the groove instead of the bottom thereof.

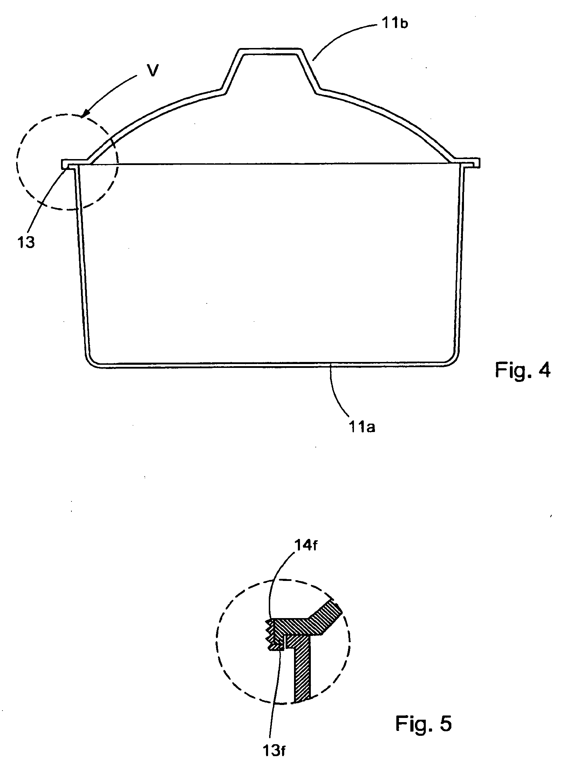

In the construction variant of Figures 4 and 5, the edge 13f is constructed on the lid lib. The seal 14f which is applied to the edge 13f is of the type having multiple lips, similar to the seal 14a. Generally, however, any one of the other seals 13b-e described above for the variants with an edge 13 on the bowl 11a, could also be advantageously applied to the edge 13f.

By adoption of the above-indicated seals which are applied in addition to the external edge, it is possible to construct cartridges which are adaptable to seats which have a shape which does not completely engage with that of the edge, benefiting from the ease of resilient deformability of the seal. It is thereby possible to substantially compensate for dimensional and/or structural tolerances which otherwise inhibit the sealing insertion of the filter in the seat by means of radial compression of the seal in the gap between the edge and the seat when the cartridge is fitted in the seat.

## Claims

1. A replaceable cartridge type filter (1) for filtering systems including a pipe (3), particularly for processing drinking water, including a casing (11) for containing the filtering material that is perimetrally surrounded by a annular edge (13) which defines a sealing surface, which is provided to engage in a sealing manner with a corresponding seat (6) defined in said pipe (3) for receiving in a sealing manner and retaining the cartridge so as to identify an upstream portion and a downstream portion with respect to the cartridge which communicate with each other only by way of the cartridge, and comprising, at the annular edge (13), a deformable seal (14a; 14d) whose deformability under load is substantially greater than the deformability of the edge (13), the seal (14a; 14d) being fixed in a non-removable manner to the annular edge (13) and **characterized in that** the seal has a profile with multiple lips and **in that** the edge (13) is connectable with play to a facing wall (7) of the seat (6) so that the seal (14a; 14d) can be compressed in the gap between the edge and the seat when the cartridge is fitted in the seat (6) and **in that** the seal (14a; 14d) is fixed to the annular edge (13) by means of joint injection-moulding with the casing (11) of the cartridge.

2. A filter (1) according to one or more of the preceding claims, wherein there are provided at least two axial seals (14e) at the edge (13).

3. A filter according to any one of claims 1 to 2, wherein the annular edge (13a-13e) is construed on a bowl (11a) of the casing (11).

4. A filter according to any one of claims 1 to 2, wherein the annular edge (13f) is construed on a lid (11b) of the casing (11).

5. A filtering system including a pipe (3) and a replaceable cartridge type filter (1) which is constructed in accordance with one or more of the preceding claims, a seat (6) being defined in said pipe (3) for receiving in a sealing manner said replaceable cartridge (1).

6. A filtering system according to either claim 5, wherein the facing wall (7) of the seat (6) has a plurality of projecting rib structures (9).

## Patentansprüche

1. Austauschbarer kartuschenähnlicher Filter (1) für Filtersysteme mit einer Leitung (3), insbesondere zum Aufbereiten von Trinkwasser, mit einem Gehäuse (11) zum Aufnehmen des Filtermaterials, das durch eine ringförmige Kante (13) umlaufend umschlossen ist, die eine Dichtfläche definiert, die vorgesehen ist, um mit einem entsprechenden Sitz (6), der in der Leitung definiert ist, zum abdichtenden Aufnehmen und Halten der Kartusche abdichtend in Eingriff ist, um einen stromaufwärtsliegenden Bereich und einen stromabwärtsliegenden Bereich bezüglich der Kartusche zu bestimmen, die nur durch die Kartusche miteinander in Verbindung stehen, und an der ringförmigen Kante (13) eine verformbare Dichtung (14a - e; 14d) aufweist, deren Verformbarkeit unter Belastung im Wesentlichen größer ist als die Verformbarkeit der Kante (13), wobei die Dichtung (14a - e; 14d) in einer nicht entfernbaren Art an der ringförmigen Kante (13) fixiert ist,
und **dadurch gekennzeichnet ist, dass** die Dichtung ein Profil mit mehreren Lippen aufweist, und dass die Kante (13) mit einer zugewandten Wand (7) des Sitzes (6) mit Spiel verbindbar ist, so dass die Dichtung (14a - e; 14d) im Zwischenraum zwischen er Kante und dem Sitz zusammengedrückt werden kann, wenn die Kartusche im Sitz (6) eingepasst ist,
und dadurch, dass die Dichtung (14a - e; 14d) an der ringförmigen Kante (13) durch gemeinsames Spritzgießen mit dem Gehäuse (11) der Kartusche fixiert wird.

2. Filter (1) gemäß einem oder mehreren der vorhergehenden Ansprüche, wobei zumindest zwei axiale Dichtungen (14e) an der Kante (13) vorgesehen werden.

3. Filter (1) gemäß einem der Ansprüche 1 bis 2, wobei die ringförmige Kante (13a - 13e) auf einer Schale (11a) des Gehäuses (11) angeordnet ist.

4. Filter (1) gemäß einem der Ansprüche 1 bis 2, wobei die ringförmige Kante (13f) auf einem Deckel (11b) des Gehäuses (11) angeordnet ist.

5. Filtersystem mit einem Rohr (3) und einem austauschbaren kartuschenähnlichen Filter (1), das gemäß einem oder mehreren der vorhergehenden Ansprüche konstruiert ist, wobei ein Sitz (6) im Rohr (3) zum Aufnehmen der austauschbaren Kartusche (1) in abdichtender Weise definiert ist.

6. Filtersystem gemäß Anspruch 5, wobei die zugewandte Wand (7) des Sitzes (6) eine Mehrzahl von hervorstehenden Rippenanordnungen (9) aufweist.

## Revendications

1. Filtre (1) du type cartouche remplaçable pour des systèmes de filtration incluant un tube (3), particulièrement pour le traitement d'eau potable, incluant un boîtier (11) pour contenir le matériau filtrant qui est entouré de façon périphérique par une bordure annulaire (13) qui définit une surface d'étanchéité, laquelle est prévue pour engager de manière étanche un siège correspondant (6) défini dans ledit tube (3) afin de recevoir de manière étanche et de retenir la cartouche de façon à identifier une portion amont et une portion aval par rapport à la cartouche, qui communiquent l'une avec l'autre uniquement via la cartouche et comprenant, à la bordure annulaire (13), un joint déformable (14a ; 14d) dont la déformabilité sous charge est sensiblement plus élevée que la déformabilité de la bordure (13), le joint (14a ; 14d) étant fixé d'une manière inamovible sur la bordure annulaire (13), et **caractérisé en ce que** le joint possède un profil avec une multiplicité de lèvres, et **en ce que** la bordure (13) est susceptible d'être reliée avec jeu à une paroi faciale (7) du siège (6) de sorte que le joint (14a ; 14d) peut être comprimé dans l'intervalle entre la bordure et le siège quand la cartouche est engagée dans le siège (6) et **en ce que** le joint (14a ; 14d) est fixé sur la bordure annulaire (13) au moyen d'un moulage par injection conjoint avec le boîtier (11) de la cartouche.

2. Filtre (1) selon l'une ou plusieurs des revendications précédentes, dans lequel il est prévu au moins deux oints axiaux (14e) à la bordure (13).

3. Filtre selon l'une quelconque des revendications 1 à 2, dans lequel la bordure annulaire (13a-13e) est réalisée sur une coupelle (11a) du boîtier (11).

4. Filtre selon l'une quelconque des revendications 1 à 2, dans lequel la bordure annulaire (13f) est réalisée sur un couvercle (11b) du boîtier (11).

5. Système de filtration incluant un tube (3) et un filtre (1) du type cartouche remplaçable qui est réalisé selon l'une ou plusieurs des revendications précédentes, un siège (6) étant défini dans ledit tube (3) pour recevoir ladite cartouche remplaçable (1) d'une manière étanche.

6. Système de filtration selon la revendication 5, dans lequel la paroi faciale (7) du siège (6) présente une pluralité de structures en forme de nervures en projection (9).
